# EUROPEAN PATENT APPLICATION

(11) **EP 1 901 158 A1**
(43) Date of publication of application: **19.03.2008**
(21) Application number: 06747016.1
(22) Date of filing: 30.05.2006
(51) Int. Cl.: G06F 3/048

(54) **DATA PROCESSING DEVICE**

(30) Priority: 05.07.2005 JP 2005195914
(71) Applicant: Matsusita Electric Industrial Co., Ltd., Kadoma-shi, Osaka 571-8501 (JP)
(72) Inventor: NAKAYA, Satosi c/o Matsushita El. Ind. Co. Ltd., 2-1-61, Shiromi, Chuo-ku, Osaka 540-6207 (JP)
(74) Representative: Pautex Schneider, Nicole Véronique
(86) International application number: PCT/JP2006/310788
(87) International publication number: WO 2007/004372

(57) **Abstract**

The present invention solves such a problem that a scroll parameter did not fit in with an operator intuition. A scroll controlling program is stored in the HDD 12. The scroll controlling program controls a CPU 14 to function as a controller that changes a scroll parameter (a scroll initial velocity Vs0 and a scroll duration T) in response to contact coordinate data outputted before termination of the contact with a touch panel 24. In this scroll controlling program, the scroll initial velocity Vs0 is defined by an operation expression "Vs0=F(Vtc)" using a change rate Vtc of the contact coordinate as a variable. In contrast, the scroll duration T is defined by an operation expression "T=G(L)" using a change amount L of the contact coordinate as a variable.

## Description

### Technical Field

The present invention relates to a data processing apparatus, such as a navigation apparatus, for controlling a display device to display an image.

### Background Art

A navigation apparatus is known as the background art (see Patent Literature 1, for example), which scrolls a road map smoothly and decelerates scroll speed gradually to stop the scrolling, This apparatus calculates change in scroll velocity, in which the scroll velocity decelerates from initial velocity to zero. This initial velocity is a velocity of scrolling the road map at the time of termination of operating a scroll switch.
Patent Literature 1: JP-A-2004-117830 (page.7 to page.8, and Fig.3)

### Disclosure of the Invention

### Problems that the Invention is to Solve

In the navigation apparatus set forth in Patent Literature 1, each of a rate of decelerating the scroll velocity and duration for stopping the scrolling depends on a scroll velocity of the time in which operating the scroll switch terminates. Therefore, each of the deceleration rate and the duration is out of operator intuition..

### Means for Solving the Problems

The present invention provides a data processing apparatus for controlling a display device to continue scrolling after termination of a contact between an object and a touch panel. This apparatus includes a controller changing a scroll parameter depending on contact coordinate data outputted before the termination. The interpretation of the wordings in the present invention will be given as follows.

The "termination of a contact" is a state in which outputting the contact coordinate data is stopping over a predetermined duration.

The phrase "depending on contact coordinate data" defines the contact coordinate data as an essential element of the input value. This definition intends to exclude a control that depends on only an input value from which the contact coordinate data is except.

The "scroll parameter" includes: a scroll initial velocity (an initial velocity for the scrolling); scroll duration (duration for the scrolling); a scroll direction (a direction of the scrolling); and the like,

The "controller" is either hardware or sets of software running on hardware and the hardware, which executes processes for controlling,

In the data processing apparatus, the "controller" preferably changes the scroll initial velocity depending on a contact-coordinate change rate (a rate of change of contact coordinates). The interpretation of the wordings in the present invention will be given as follows.

The "contact-coordinate change rate" is a subordinate concept of "the contact coordinate data", which is speed or velocity at which the object is moving on the touch panel.

The "scroll initial velocity" is an initial value of velocity of scrolling in the display device after the termination. The phrase "velocity of scrolling in the display device after the termination" is referred to as a "scroll velocity" hereinafter.

The "changing [changes] the scroll initial velocity depending on a contact-coordinate change rate" is to get the initial velocity from the rate by programs or look-up tables. For example, the scroll initial velocity may be proportional to the contact-coordinate change rate.

The "controller" is a unit for keeping the scroll velocity at the scroll initial velocity, decelerating gradually the scroll velocity from the scroll initial velocity, or decelerating gradually the scroll velocity from the scroll initial velocity to zero.

In the data processing apparatus, the "controller" preferably changes the scroll duration depending on contact-coordinate change amount (amount of change of contact coordinates). The interpretation of the wordings in the present invention will be given as follows.

The "contact-coordinate change amount" is a subordinate concept of "the contact coordinate data", which is a distance over which the object is moving on the touch panel.

The "scroll duration" is time interval for which the display device continues the scrolling after the termination.

The "changing [changes] the scroll duration depending oncontact-coordinate change amount" is to get the scroll duration from the contact-coordinate change amount by programs or look-up tables. For example, the scroll duration may be proportionate to the contact-coordinate change amount.

The "controller" preferably sets the duration to zeroif an amount of change of the contact coordinates is equal to or less than a predetermined value.

In the data processing apparatus, the "controller" preferably keeps display path corresponding to contact path. The display path is line along which an image moves. This image has been displayed at display coordinate corresponding to an origin of the contact path. The contact path is a line along which the contact coordinate moves. The interpretation of the wording in the present invention will be given as follows.

The "keeping display path corresponding to contact path" is explained to be overlapping the display path and the contact path. Preferably, the display path is tracking the contact path.

### Advantages of the Invention

In the present invention, changing the scroll parameter depending on contact coordinate data outputted before the termination will match the scroll parameter to operator intuition,

### Brief Description of the Drawings

Fig. 1 illustrates configuration hardware components of a navigation apparatus that is the best mode of a data processing apparatus relating to the present invention.
Fig. 2 is a flowchart of a routine for control of scrollingof the best mode.
Fig. 3(a) illustrates motion of a finger moving on a touch panel from a contact coordinate Ps to another contact coordinate Pe..Fig. 3(b) illustrates relationship between a contact coordinate P and time in Fig.3 (a).
Fig. 4(a) illustrates a linear equation defining a relationship between a contact-coordinate change rate "Vtc" and a scroll initial velocity " Vs0". Fig. 4(b) illustrates a curve equation defining a relationship between a contact-coordinate change rate "Vtc" and a scroll initial velocity " Vs0".
Fig. 5(a) illustrates a linear equation defining a relationship between contact-coordinate change amount "L" and scroll duration "T". Fig. 5(b) illustrates a curve equation defining a relationship between contact-coordinate change amount "L" and scroll duration "T".
Fig. 6 illustrates a relationship between scroll duration "T"' and a scrollvelocity "Vs".
Fig. 7(a) illustrates an origin of scrolling and a scroll direction. Fig.7(b) illustrates a display example of tracking scroll.

### Description of Reference Numerals

1: navigation apparatus (data processing apparatus)
12: HDD (controller)
14: CPU (controller)
24: touch panel
32: display device

### Best mode for Carrying Out the Invention

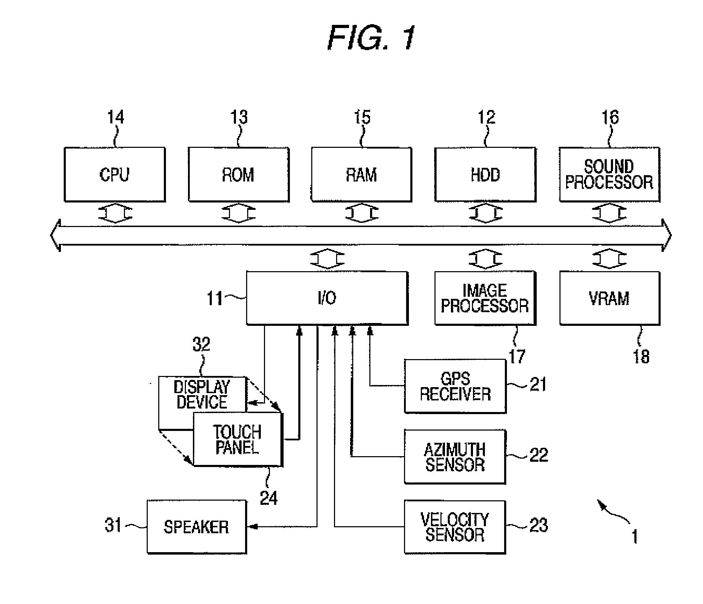

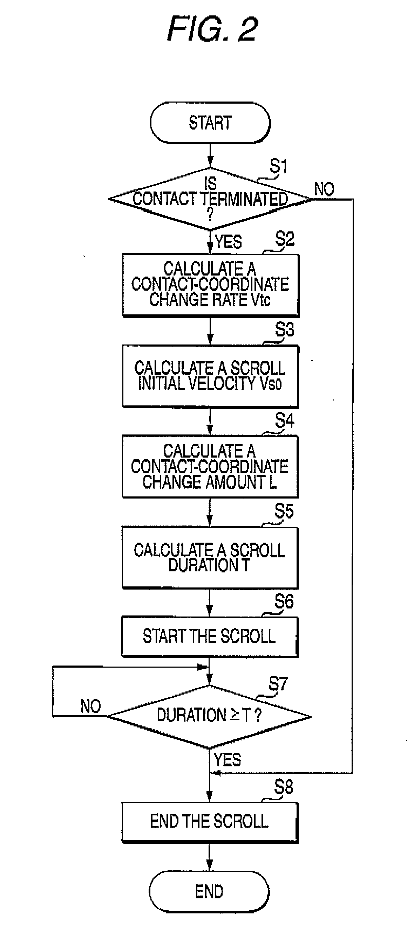

A navigation apparatus that is the best mode of a data processing apparatus relating to the present invention will be explained hereinafter with referring to FIG.1 to FIG.7.

<CONFIGURATION> As shown in FIG.1, a navigation apparatus 1 includes some hardware components: an I/O 11 inputting/outputting data; a HDD 12 (corresponding to a "controller") storing various data, programs, and the like; a ROM 13 storing a basic program such as BIOS, and the like; a CPU 14 (corresponding to the "controller") executing a program stored in the HDD 12 and a program stored in the ROM 13; a RAM 15holdingvarious data; a sound processor 16 processing sounds data; an image processor 17 processing image data; and a VRAM 18 holding image data. These devices are connected via a bus line.

An input side of the I/O 11 is connected to some devices: a GPS receiver 21 receiving GPS data corresponding to a present position, a time, etc.; an azimuth sensor 22 outputting azimuth data corresponding to a traveling direction of mobile objects; a velocity sensor 23 outputting velocity data corresponding to a velocity of mobile objects; and a touch panel 24 outputting contact coordinate data corresponding to a contact coordinate. Data from various sensors or detectors are temporally stored on the RAM 15.

An output side of the I/O 11 is connected to some devices: a loud speaker 31 outputting the sounds corresponding to the sounds data; and a display device 32 displaying the image corresponding to the image data. The display device 32 is arranged, of which display area is overlaid by a contact sensor area of the touch panel 24.

The HDD 12 stores a scroll control program by which the CPU 14 functions as the controller for changing a scroll parameter depending on contact coordinate data outputted before termination of a contact between an object and the touch panel 24. The HDD 12 stores map data corresponding to the map image.

<PROCESSES> As shown in FIG,2, the CPU 14 loads the scroll control programfrom the HDD 12 into the RAM 15 to execute following processes.

In step S1, the CPU 14 reads the contact coordinate data held in the RAM 15 to determine if contact of finger to the touch panel 24 terminates. Concretely, a termination of contact of finger to the touch panel 24 is determined after a predetermined time (e.g., 500 ms) elapses from a time of last hold of the contact coordinate data.

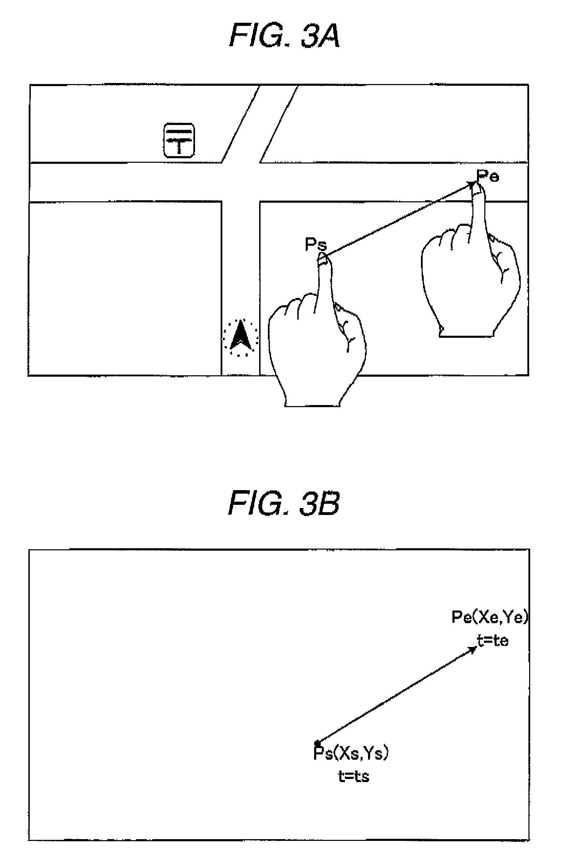

If determining that a contact of finger to the touch panel 24 terminates ("Yes" in step S1), then the CPU 14 reads the contact coordinate data from the RAM 15 to calculate the contact-coordinate change rate "Vtc" in steps S2. That is, the calculated is a velocity of moving of a finger. For example, the contact-coordinate change rate "Vtc" of the finger moving from the contact coordinate Ps to the contact coordinate Pe on the touch panel 24 (see Fig. 3(a)) is described by an equation "Vtc=(Pe-Ps)/(te-ts)" (see Fig. 3(b)). The "ts" is a time at which the finger is at the contact coordinate Ps. The "te" is a time at which the finger is at the contact coordinate Pe.

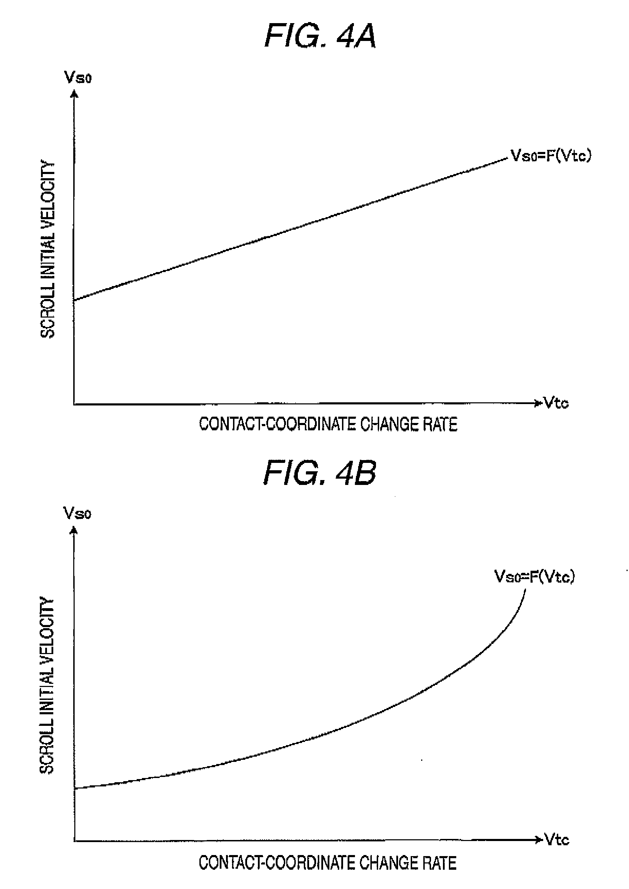

After calculating the contact-coordinate change rate "Vtc" in step S2, the CPU 14 reads calculation result data corresponding to contact-coordinate change rate "Vtc" to calculate the scroll initial velocity "Vs0" in step S3. Concretely, the scroll initial velocity "Vs0" is defined by a computing equation "Vs0=F(Vtc)" of which variable is the contact-coordinate change rate "Vtc". In the present embodiment, the computing equation "Vs0=F(Vtc)" is given as either a linear equation (see Fig.4(a)) or a curve equation (see Fig. 4(b)).

After calculating the scroll initial velocity "Vs0" in step S3, the CPU 14 reads the contact coordinate data from the RAM15 to calculate contact-coordinate change amount "L" in step 54. That is, the calculated is amount of moving of the finger. For example, the contact-coordinate change amount "L" of the finger moving from the contact coordinate Ps to the contact coordinate Pe on the touch panel 24 (see Fig. 3(a)) is described by an equation "L={(Xe-Xs)²+(Ye-Ys)²}^{1/2n} (see FIg.3(b)).

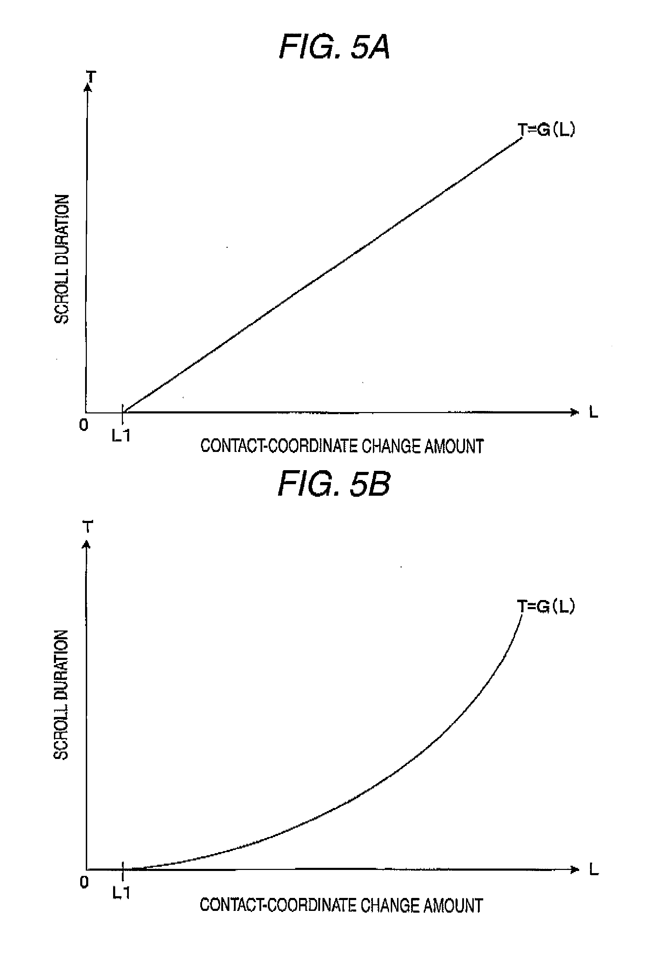

After calculating the contact-coordinate change amount "L" in step S4, the CPU 14 reads the calculation result data corresponding to the contact-coordinate change amount "L" to calculate the scroll duration "T" in step S5. Concretely, the scroll duration "T' is defined by a computing equation "T=G(L)" of which variable is the contact-coordinate change amount "L". In the present embodiment, the computing equation "T=G(L)" is given as either a linear equation (see Fig.5(a)) or a curve equation (see Fig.5(b)). Since the computing equation "T=G(L)" is a function defined in a range of "L≥L1", the scroll duration "T" in a range of "0≤L≤L1" is set to zero or nearly zero.

After calculating the scroll duration "T"in step S5, the CPU 14 outputs a command in step S6 to start the after-termination scroll (scrolling after the termination of contact) of which velocity is the scroll velocity "Vs". After the command is outputted, the image processor 17 loads map data from the HDD 12 into the VRAM 18 as image data. Then, the image processor 17 transfers the image data from the VRAM 18 to the display device 32 at an output rate corresponding to the scroll velocity "Vs". That is, the display device 32 scrolls the map at the scroll velocity "Vs".

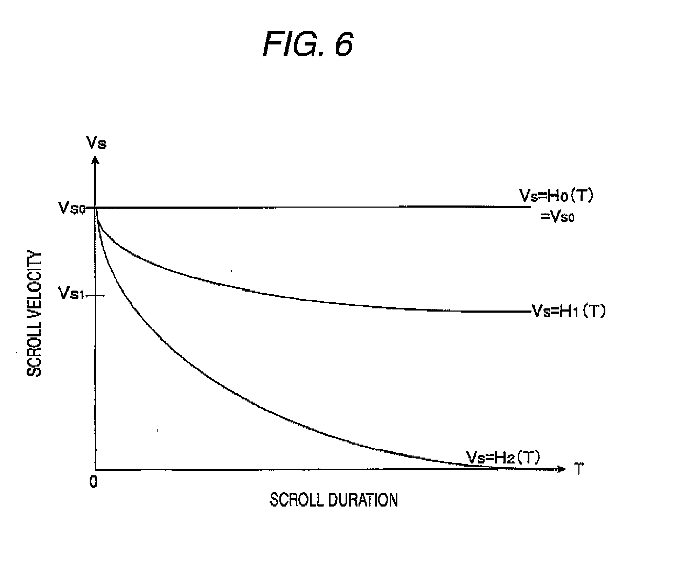

In step S5, this scroll velocity "Vs" is defined by a computing equation of which the initial value is the scroll initial velocity "Vs0" calculated in step S3 (see FIG.6). For example; the scroll velocity "Vs" in the computing equation "Vs=H0(T)=Vs0" is kept at the scroll initial velocity "Vs0". In the computing equation "Vs=H1(T); If T→∞, then lim H1(T)=Vs1 (<Vs0) ", the scroll velocity "Vs" is decelerated gradually from the scroll initial velocity "Vs0" to a velocity "Vs1". The velocity "Vs1" is slower than the scroll initial velocity "Vs0". Here, The "Vs1" is set to a value at which the user can confirm visually the image during the scrolling. In the computing equation "Vs=H2(T); If T→∞, then lim H2(T)=0", the scroll velocity "Vs" is decelerated gradually from the scroll initial velocity "Vs0" to zero.

After starting the after-termination scroll in step S6, the CPU 14 determines if duration from the start of the after-termination scroll is greater than or equal to the scroll duration "T" calculated in step S5, in step S7.

If determining that duration from the start of the after-termination scroll is greater than or equal to the scroll duration "T" ("Yes" in step S7), the CPU 14 outputs data command to end the after-termination scroll. That is, the display device 32 stops the scrolling of the map.

In the above processes, scroll amount (amount of the scrolling) "S" by which the display device 32 scrolls the map is defined by a relation "S ∝ jVsdT". Therefore, If, between two cases, each scroll velocity "Vs" is equal and each scroll duration "T" is different (e.g., "T1" and "T2" (T1>T2)), then scroll amount "S1" in the scroll duration "T1" is larger than scroll amount "S2" in the scroll duration "T2". In contrast, if, between two cases, each scroll duration "T" is equal and each scroll velocity "Vs" is different (e.g., "Vs3" and "Vs4" (Vs3>Vs4)), scroll amount "S3" at the scroll velocity "Vs3" is larger than scroll amount "S4" at the scroll velocity "Vs4".

<ADVANTAGE IN THE BEST MODE > In the best mode, the scroll initial velocity "Vs0" differs depending on the velocity of the finger moving. Therefore, the scroll initial velocity "Vs0" will match to operator intuition (in other words "operation feeling"). More concretely, in the best mode, operators will feel like their spinning of a globe.

In the best mode, the scroll initial velocity "Vs0" is proportionate to a velocity of the finger moving. Therefore, the scroll initial velocity "Vs0"' will further match to the operator intuition. More concretely, when the operators want to view immediately the map being ahead in the scrolling, the velocity of the finger moving tends to be faster relatively. In this case, the operators will be satisfied with immediately viewing of the map ahead in the scrolling because the scroll initial velocity "Vs0" becomes relatively faster.

In the best mode, the scroll velocity "Vs" is kept at the scroll initial velocity "Vs0". Therefore, the scrolling will continues at a velocity satisfied with an operator intention.

In the best mode, the scroll velocity "Vs" will be decelerated gradually from the scroll initial velocity "Vs0" to the velocity "Vs1" that is slower than present scroll velocity. Therefore, if the velocity "Vs1" is a velocity at which the operators are able to view the map, the scrolling will continues under the condition that the operators look at the display easily.

In the best mode, the scroll velocity "Vs" will be decelerated gradually from the scroll initial velocity "Vs0" to zero. Therefore, the scrolling will stops without requesting a new operation to the operator.

In the best mode, the scroll duration "T" differs depending on amount of moving of the finger. Therefore, the scroll duration "T" will match to the operator intention. More concretely, in the best mode, operators will feel like their spinning of a globe,

In the best mode, the scroll duration "T" is proportionate to amount of moving of the finger. Therefore, the scroll duration "T" will match to the operator intention. More concretely, when the operators want to view the undisplayed map (particularly the map at a remote location (a location of a long distance from a present display position)), amount of moving of the finger tends to be larger relatively. In this case, the operators will be satisfied with immediately viewing of the undisplayed map because the scroll duration "T" becomes relatively longer.

In the best mode, when amount of moving of the finger is less than a predetermined amount, the scroll duration "T" is set to zero or nearly zero. When the operators want to scroll the map just a little, amount of moving of the finger tends to be shorter than a predetermined amount. Therefore, the operators will be satisfied with scrolling the map just a little.

<VARIATION> In the above explanation, it is not always requested that the finger moves from the contact coordinate "Ps" to the contact coordinate "Pe" while tracing the path on the touch panel 24. Any approach may be employed if the contact coordinate "Ps" and the contact coordinate "Pe" may be defined as a start point and an end point of the vector respectively.

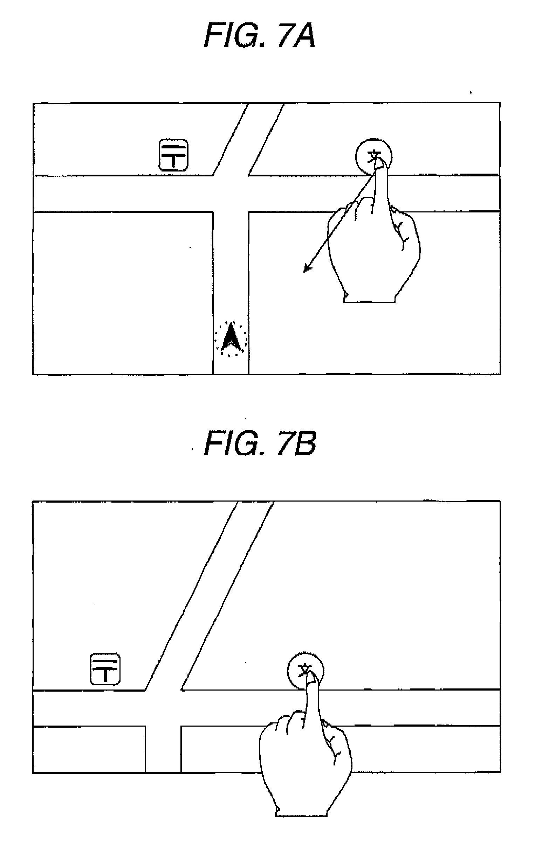

When the finger moves from the contact coordinate "Ps" to the contact coordinate "Pe" while tracing the route on the touch panel 24 and thus the contact coordinate draws a path, the image displayed on the display coordinate of the display device 32 corresponding to the contact coordinate Ps (see Fig. 7(a)) may be displayed while following the movement of the finger (see Fig. 7(b)). According to this variation, the user never looses the start point of the contact path.

### Industrial Applicability

As described above, the present invention possesses such an advantage that it is possible to change the scroll parameter depending on contact coordinate data outputted before the termination will match the scroll parameter to operator intuition. The present invention is useful for the navigation apparatus, or the like,

## Claims

1. A data processing apparatus for controlling a display device to continue scrolling after termination of a contact between an object and a touch panel, comprising:
a controller which changes a scroll parameter depending on contact coordinate data outputted before the termination of the contact.

2. The data processing apparatus according to claim 1, wherein the controller changes a scroll initial velocity depending on a rate of change of contact coordinates.

3. The data processing apparatus according to claim 2, wherein the controller proportionates the rate of change of the contact coordinates to the scroll initial velocity.

4. The data processing apparatus according to claim 2, wherein the controller keeps a scroll velocity at the scroll initial velocity.

5. The data processing apparatus according to claim 2, wherein the controller gradually decelerates a scroll velocity from the scroll initial velocity to a velocity that is smaller than the scroll velocity.

6. The data processing apparatus according to claim 2, wherein the controller gradually decelerates a scroll velocity from the scroll initial velocity to zero.

7. The data processing apparatus according to claim 1, wherein the controller changes a scroll duration depending on amount of change of contact coordinates.

8. The data processing apparatus according to claim 7, wherein the controller proportionates the amount of change of the contact coordinates to the scroll duration.

9. The data processing apparatus according to claim 7, wherein the controller sets the scroll duration to zero if the amount of change of the contact coordinates is equal to or less than a predetermined value.

10. The data processing apparatus according to claim 1, wherein the controller keeps display path corresponding to contact path;
wherein the contact path is a line along which the contact coordinate moves; and
wherein the display path is a line along which an image moves, the image being displayed at display coordinate corresponding to an origin of the contact path.

11. A navigation apparatus equipped with the data processing apparatus set forth in any one of claim 1 to claim 10.
